# EUROPEAN PATENT APPLICATION

(11) **EP 2 081 168 A2**
(43) Date of publication of application: **22.07.2009**
(21) Application number: 08020852.3
(22) Date of filing: 01.12.2008
(51) Int. Cl.: G08G 1/16

(54) **Traveling control device, method and computer program product**

(30) Priority: 16.01.2008 JP 2008007352
(71) Applicant: Mazda Motor Corporation, Fuchu-cho Aki-gun Hiroshima, Hiroshima 730-8670 (JP)
(72) Inventor: Ikeda, Kenichi, Hiroshima 730-8670 (JP)
(74) Representative: Müller-Boré & Partner Patentanwälte

(57) **Abstract**

A traveling control device comprises an obstacle detecting portion **1a** to detect an obstacle in front of a vehicle, a dangerous-area setting portion **1d** to set a contact-dangerous area with a specified width which is located beside the obstacle which is detected by the obstacle detecting portion **1a,** an entry detecting portion **1f** to detect an entry of the vehicle into the contact-dangerous area, and a warning control portion **1h** to operate a warning device **21** when the entry of the vehicle into the contact-dangerous area is detected by the entry detecting portion **1f.** Accordingly, it can be surely prevented that the vehicle approaches the obstacle too close or contacts the obstacle, thereby improving the safety of the vehicle traveling.

## Description

The present invention relates to a traveling control device of a vehicle which comprises a means operative to detect an obstacle in front of the vehicle, to a traveling control method and computer program product.

Conventionally, a traveling control device which detects an obstacle in front of the vehicle with a sensor, such as a camera or radar, and determines whether the vehicle can pass the obstacle is known.

For example, Japanese Patent Laid-Open Publication No. 08-221698 discloses the obstacle detection device which detects the distance from the vehicle to the front object detected with the image sensor and determines the possibility of the vehicle passing the object.

Generally, two-wheeled vehicles, such as a bicycle or motor bicycle, are not so stable in traveling compared with four-wheeled vehicles, so their traveling condition may becomes unstable when they travel over stones on the road or receive a strong wind.

Accordingly, there is a concern that even if it is detected by the obstacle detection device disclosed in the above-described patent document that the vehicle could pass the obstacle (object), the vehicle would approach the two-wheeled vehicle too close or contact the two-wheeled vehicle improperly.

Further, there occurs a situation in which when the vehicle travels on the road, a door of a vehicle which stops in front of the traveling vehicle is opened abruptly or a pedestrian rushes out from behind the front vehicle. In this situation, there is also a concern that the vehicle would contract the door or the pedestrian and the above-described obstacle detection device could not avoid these accidents.

The present invention has been devised in view of the above-described matters, and an object of the present invention is to improving the safety of the vehicle traveling.

The object is solved according to the present invention by the features of the independent claims. Preferred embodiments of the present invention are subject of the dependent claims.

According to the present invention, there is provided a traveling control device for a vehicle, comprising an obstacle detecting means operative to detect an obstacle substantially in front of the vehicle, a dangerous-area setting means operative to set a contact-dangerous area with a specified (predetermined or predeterminable) width or configuration which is located beside the obstacle which is detected by the obstacle detecting means, an entry detecting means operative to detect an at least partial entry of the vehicle into the contact-dangerous area set by the dangerous-area setting means, and a warning control means operative to operate a warning means when the entry of the vehicle into the contact-dangerous area is detected by the entry detecting means.

According to the present invention, even in a case in which the detected obstacle becomes unstable or the pedestrian rushes out from behind the obstacle, the vehicle can be surely prevented from approaching the obstacle too close or contacting the obstacle improperly, thereby improving the safety of the vehicle traveling.

According to an embodiment of the present invention, the traveling control device further comprises an obstacle determining means operative to determine whether the obstacle detected by the obstacle detecting means is a two-wheeled vehicle or not, wherein the dangerous-area setting means is configured to set the contact-dangerous area only when it is detected by the obstacle determining means that the obstacle is the two-wheeled vehicle or an unstable moving obstacle. Thereby, the safety of the two-wheeled vehicle which may be unstable in traveling compared with the four-wheeled vehicle can be improved. Further, since the contact-dangerous area is set only when the two-wheeled vehicle is detected, the safe and smooth traveling of the vehicle can be provided with a reduction of the chance of setting the contact-dangerous area properly.

According to another embodiment of the present invention, the traveling control device further comprises a passing-possibility determining means operative to determine whether the vehicle can pass the obstacle without at least partly entering into the contact-dangerous area set by the dangerous-area setting means, wherein the warning control means is configured to further operate the warning means when it is determined by the passing-possibility determining means that the vehicle cannot pass the obstacle without at least partly entering into the contact-dangerous area. Thereby, the passenger of the vehicle can be warned of the situation in which the vehicle may not pass the obstacle without entering into the contact-dangerous area before approaching the obstacle, thereby improving the safety of the vehicle traveling, assisting the passenger.

According to another embodiment of the present invention, the traveling control further comprises a braking control means operative to operate a braking means of the vehicle when it is determined by the passing-possibility determining means that the vehicle cannot pass the obstacle without at least partly entering into the contact-dangerous area. Thereby, since the braking control means operates the braking means before the vehicle approaches the obstacle, the safety of the vehicle traveling can be improved further by surely preventing the vehicle from approaching the obstacle too close or contacting the obstacle improperly.

According to another embodiment of the present invention, the traveling control further comprises a braking control means operative to operate a braking means of the vehicle when it is determined by the (at least partial) entry detecting means that the entry of the vehicle into the contact-dangerous area is detected. Thereby, since the braking control means operates the braking means even in a case in which the vehicle has entered into the contact-dangerous area, it can be prevented that the vehicle travels along with the obstacle substantially side by side or passes the obstacle in the state in which the vehicle becomes so close to the obstacle.

According to another embodiment of the present invention, the traveling control further comprises an assist means operative to assist the vehicle so that the vehicle travels inside a specified traveling lane and an inside-traveling-lane passing-possibility determining means operative to determine whether the vehicle can pass the obstacle inside the specified traveling lane without entering into the contact-dangerous area set by the dangerous-area setting means, wherein the assist means is configured not to operate when it is determined by the inside-traveling-lane passing-possibility determining means that the vehicle cannot pass the obstacle without entering into the contact-dangerous area. Thereby, since there is provided the assist means which assists the vehicle so that the vehicle travels inside the specified traveling lane, the smooth and safe traveling of the vehicle inside the specified traveling lane can be provided. Herein, the assist means is configured not to operate when it is determined by the inside-traveling-lane passing-possibility determining means that the vehicle cannot pass the obstacle without entering into the contact-dangerous area, so that in a case in which the vehicle cannot pass the obstacle inside the specified traveling lane without entering into the contact-dangerous area, the vehicle can travel passing the obstacle by changing the traveling lane properly.

According to another embodiment of the present invention, the traveling control further comprises a passing determining means operative to determine whether the vehicle has passed the obstacle or not, wherein the assist means is configured to restart an operation thereof when it is determined by the passing determining means that the vehicle has passed the obstacle. Thereby, since the operation of the assist means is automatically restarted after the vehicle has passed the obstacle, the smooth and safe traveling of the vehicle inside the specified lane can be provided without letting the passenger have any troublesome feeling.

According to the present invention, there is further provided a traveling control method for a vehicle, in particular to be embodied in a traveling control device according to the invention or a preferred embodiment thereof, comprising the following steps:
detecting an obstacle substantially in front of the vehicle;
setting a contact-dangerous area with a specified width which is located beside the obstacle which is detected in said detecting step;
detecting an at least partly entry of the vehicle into the contact-dangerous area set in said setting step; and
operating a warning means when the at least partial entry of the vehicle into the contact-dangerous area is detected in said detecting step.

According to an embodiment of the present invention, the traveling control method further comprises a step of determining whether the obstacle detected in said detecting step is a two-wheeled vehicle or not, wherein in said setting step the contact-dangerous area is set only when it is detected that the obstacle is the two-wheeled vehicle.

According to a further embodiment of the present invention, the traveling control method further comprises a passing-possibility determining step determining whether the vehicle can pass the obstacle without at least partly entering into the contact-dangerous area set in said setting step, wherein in said warning step the warning means is further operated when it is determined in the passing-possibility determining step that the vehicle cannot pass the obstacle without at least partly entering into the contact-dangerous area.

According to a further embodiment of the present invention, the traveling control method further comprises a braking control step in which a braking means of the vehicle is operated or controlled when it is determined in the passing-possibility determining step that the vehicle cannot pass the obstacle without at least partly entering into the contact-dangerous area.

According to a further embodiment of the present invention, the traveling control method further comprises a braking control step in which a braking means of the vehicle is operated when it is determined in said entry detecting step that the entry of the vehicle into the contact-dangerous area is detected.

According to a further embodiment of the present invention, the traveling control method further comprises assisting the vehicle so that the vehicle travels inside a specified traveling lane and an inside-traveling-lane passing-possibility determining step determining whether the vehicle can pass the obstacle inside the specified traveling lane without entering into the contact-dangerous area set in said dangerous-area setting step, wherein said assisting of the vehicle is not operated when it is determined in the inside-traveling-lane passing-possibility determining step that the vehicle cannot pass the obstacle without at least partly entering into the contact-dangerous area.

According to a further embodiment of the present invention, the traveling control method further comprises a passing determining step determining whether the vehicle has passed the obstacle or not, wherein said in said assisting an operation thereof is restarted when it is determined in said passing determining step that the vehicle has passed the obstacle.

According to the invention, there is further provided a computer program product, particularly embodied in a computer-readable storage means, as a signal and/or as a data stream, comprising computer-readable instructions which, when loaded and executed on a suitable system, perform the steps of the traveling control method for a vehicle according to the invention or a preferred embodiment thereof.

Other features, aspects, and advantages of the present invention will become apparent from the following description which refers to the accompanying drawings. It should be understood that even though embodiments are separately described, single features thereof may be combined to additional embodiments.
FIG. **1** is a perspective view showing a schematic constitution of a vehicle equipped with a drive assist device according to a first embodiment of the present invention.
FIG. **2** is a block diagram showing the constitution of the drive assist device according to the first embodiment.
FIG. **3** is a plan view schematically showing an area of transmission of a radar device and an area of image picked up by a camera.
FIG. **4** is a schematic diagram explaining setting of marking of an object and a contact-dangerous area.
FIG. **5** is a plan view schematically showing relationships between the vehicle and an obstacle.
FIG. **6** is a flowchart showing control processing of a control unit of the drive assist device according to the first embodiment.
FIG. **7** is a block diagram showing the constitution of a drive assist device according to a second embodiment of the present invention.
FIG. **8** is a flowchart showing control processing of a control unit of the drive assist device according to the second embodiment.

Hereinafter, preferred embodiments of the present invention will be described referring to the accompanying drawings.

### EMBODIMENT 1

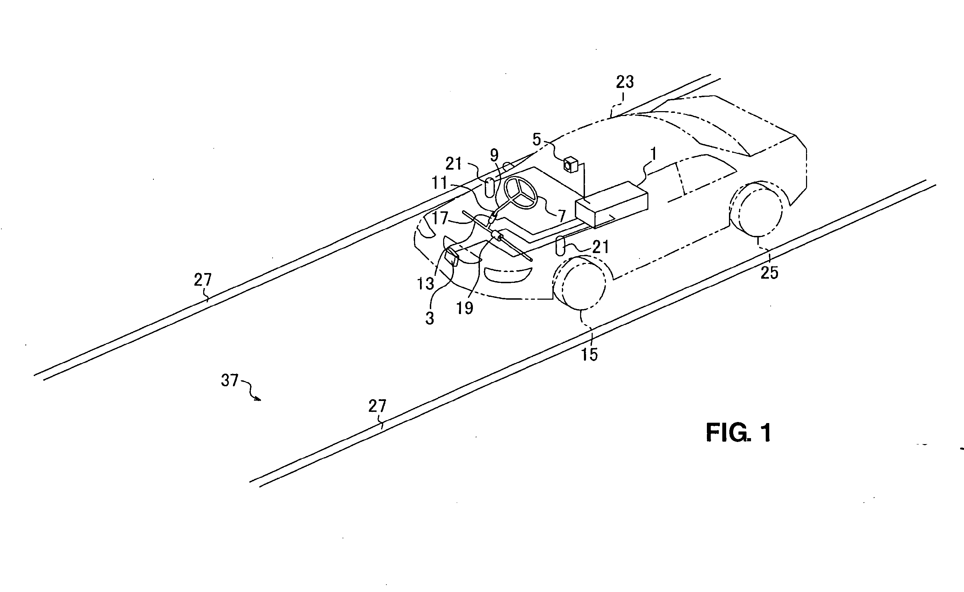

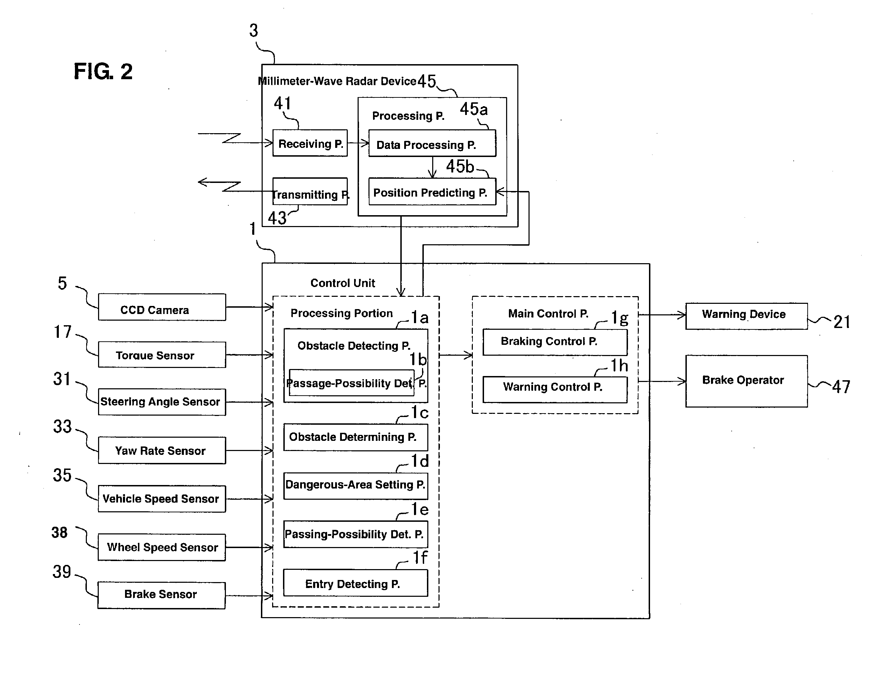

FIG. **1** shows a schematic constitution of a vehicle (an automotive vehicle in the present embodiment) 23 which is equipped with a drive assist device according to the present embodiment. In this figure, reference character 1 denotes a control unit operative to control the drive assist device, reference character **3** denotes an object or obstacle detecting device (such as an electronic scan type of millimeter-wave radar device, an IR scan camera or the like) operative to detect an objet or obstacle substantially in front of the vehicle **23,** which is provided at or near a front end portion of the vehicle **23,** and reference character **5** denotes a CCD camera as a front camera which picks up an image in front of the vehicle **23.** The control unit **1** comprises, as shown in FIG. **2****,** a processing portion which comprises an obstacle detecting portion **1a,** an obstacle determining portion **1c,** a dangerous-area setting or determining portion **1d,** a passing-possibility determining portion **1e** and/or an entry detecting portion **1f,** and a main control portion which comprises a braking control portion **1g** and/or a warning control portion **1h.** The millimeter-wave radar device **3** and the CCD camera **5** are (directly or indirectly) coupled to the control unit **1** and output related information to the control unit **1.**

A steering wheel **7** to be operated by a passenger (driver) of the vehicle **23** has a steering shaft **9** integrally or unitarily attached thereto, which is coupled to a connection shaft **11** via a universal joint (not illustrated). A rack shaft **13** is coupled to the connection shaft **11** via a rack-and-pinion mechanism (not illustrated). The rotational movement of the steering wheel **7** operated by the passenger is changed to the reciprocating movement of the rack shaft **13** via the steering shaft **9,** universal joint, connection shaft **11** and rack-and-pinion mechanism. Thereby, vehicle wheels (front wheels **15, 15)** which are coupled to both ends of the rack shaft **13** via tie rods (not illustrated) are steered. Alternatively or additionally there may be provided any other known driving system such as a drive-by-wire system or active driving system in which a driver's operation of an operational member such as a steering wheel is converted into a steering control of the vehicle wheels particularly depending on the driving condition of the vehicle.

At the connection shaft **11** is provided a torque sensor **17** which detects the steering torque inputted by the operation of the steering wheel **7** by the passenger or driver. The torque sensor **17** is configured to output related information to the steering torque detected to the control unit **1.**

Further, as shown in FIG. **2****,** the vehicle **23** is equipped with one or more of a steering angle sensor **31** to detect the steering angle of the steering wheel **7,** a vehicle speed sensor **35** to detect the traveling speed of the vehicle **23,** a yaw rate sensor **33** to detect the yaw rate of the vehicle **23** and so on. Detection information from the respective sensor(s) is supplied to the control unit **1.**

In FIG. **1****,** reference character **21** denotes a warning device (a speaker, a warning lamp, a warning vibrator e.g. provided in the steering wheel 7 and/or a safety belt tensioner as a warning means according to the present embodiment) which warns or informs the passenger of various types of information particularly with sounds, visual signals, haptic signals and/or the like. The warning device **21** is control by a warning control portion (corresponding to a warning control means) **1h** of the control unit **1.**

The millimeter-wave device **3** particularly comprises, as shown in FIG. **2****,** a transmitting portion **43** which transmits millimeter waves (radar waves) forward scanning a specified-angle (predetermined or predeterminable angle) range substantially horizontally, a receiving portion **41** which at least partly receives reflection waves of the millimeter waves which have at least partly reflected on the object in front of the vehicle **23,** and/or a processing portion **45** which executes the detection processing of the object based on data received by the receiving portion.

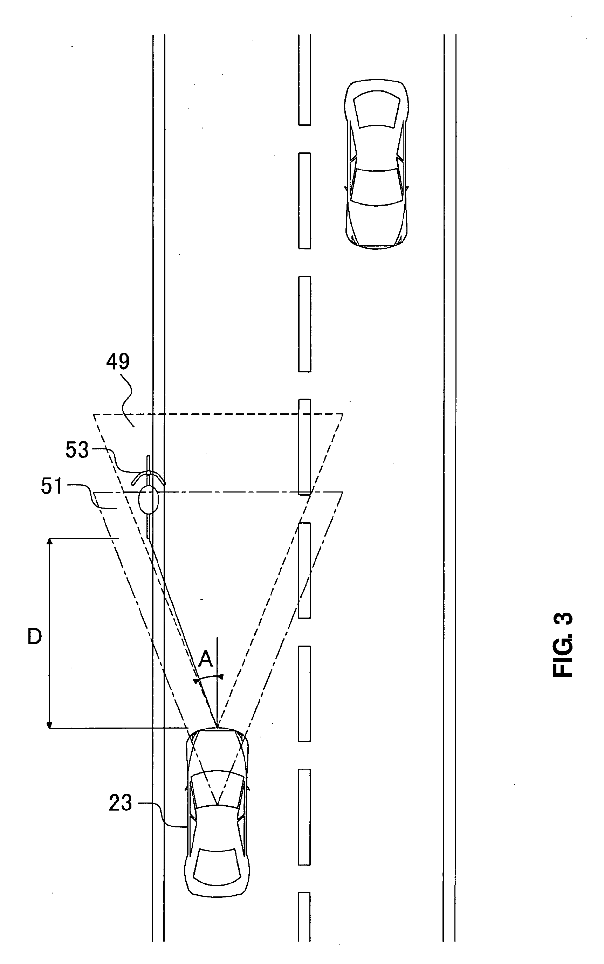

The transmitting portion **43** is configured to transmit the millimeter waves to a specified (predetermined or predeterminable) transmission area. As shown in FIG. **3****,** a transmission area (an area enclosed by a broken line in this figure) **49** particularly is substantially formed in a shape of the isosceles triangle with the vertical angle which is located on the side of the vehicle **23** in the plan view. The width of the transmission area becomes wider gradually forward from the front end of the vehicle 23. It should be understood that the transmitting portion **43** may alternatively have a laterally asymmetric configuration.

The processing portion **45** comprises a data processing portion **45a** which processes the received data particularly for filter processing, the FFT processing and the like, and a position predicting portion 45b which predicts the position of the detected object (e.g. automotive vehicle, pedestrian or cyclist such as in FIG. **3****) 53** in the predetermined or predeterminable specified time (particularly the time equivalent to the scanning time of the millimeter waves) based on the input information of the processed data and the vehicle speed of the vehicle **23** and the like from the control unit **1.** The information of the object **53** obtained thereby (the distance D between the object **53** and the vehicle **23** and/or the direction angle **A** (with respect to a longitudinal axis or a traveling direction of the vehicle) of the object **53** relative to the traveling direction of the vehicle **23,** etc.) is supplied to the obstacle detecting portion **1a** of the control unit **1.**

An area **51** of image picked up by the CCD camera **5** (an area enclosed by a one-dotted broken line in FIG. **3**) particularly is substantially formed in a shape of the isosceles triangle with the vertical angle which is located on the side of the vehicle **23** in the plan view. In other words, the area **51** laterally extends past the lateral side of the vehicle **23.** The width of the transmission area becomes wider gradually forward from the center of the vehicle **23** such as of the upper end portion of a windshield of the vehicle **23.** The CCD camera **5** picks up images of any object in front of the vehicle **23,** such as parked vehicles, drum cans left at the roadside, two-wheeled vehicles traveling in front. Data or information of images picked up by the CCD camera 5 is inputted to the obstacle detecting portion **1a** of the control unit **1.**

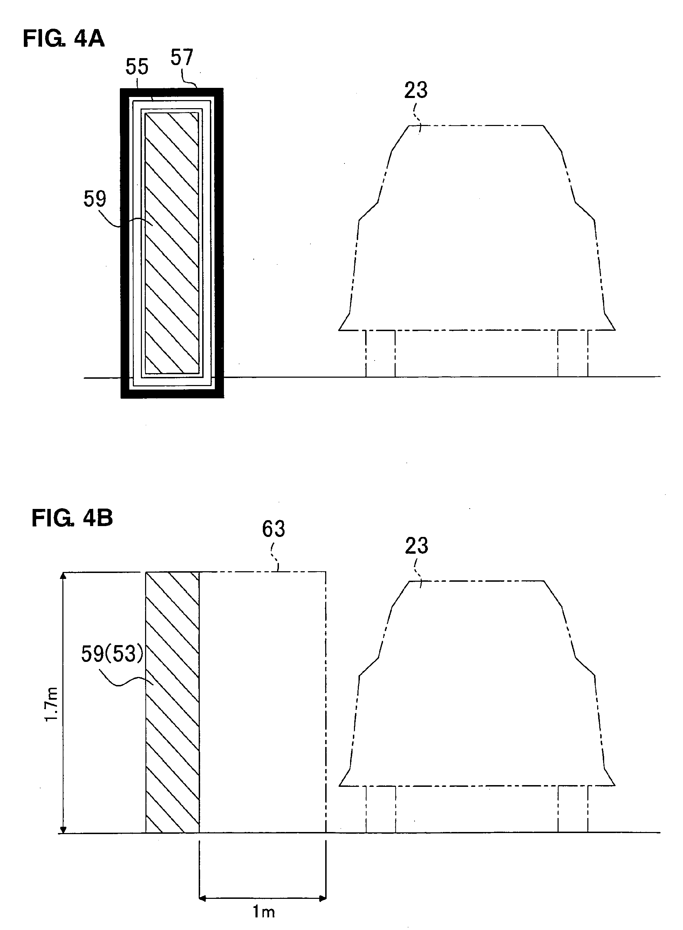

The obstacle detecting portion (obstacle detecting means) **1a** detects the obstacle substantially in front of the vehicle **23** from the objects of guide rails, traffic sign poles, four-wheeled vehicles, two-wheeled vehicles and so on particularly based on the input information from the millimeter-wave radar device **3** and/or the CCD camera **5.** More specifically, as shown in FIG. **4A****,** the obstacle detecting portion **1a** sets, for the object existing in front, a first-area frame **55** (illustrated as a white frame in FIG. **4A****)** which at least partly encloses a specified (predetermined or predeterminable) area which is located with its distance **D** from the vehicle **23** and its location angle **A** relative to the traveling direction of the vehicle **23** based on the input information from the millimeter-wave radar device **3.** Further, the obstacle detecting portion **1a** sets a second-area frame **57** (illustrated as a black frame in FIG. **4A****)** which at least partly encloses the object existing substantially in front of the vehicle **23** based on the input information from the CCD camera **5.** The first-area frame and the second-area frame particularly are overlapped (fusion) and the marking of object is executed. A marked object **59** (slash portion in FIG. **4****)** is recognized by the obstacle detecting portion **1a** as the object which has a specified (predetermined or predeterminable) size and/or shape and is positioned at the distance **D** in front of the vehicle **23** and/or the angle **A** relative to the traveling direction of the vehicle **23.** Analysis for detecting the obstacle in front of the vehicle **23** is conducted to the marked object **59.**

The obstacle detecting portion **1a** comprises a passage-possibility determining portion **1b** which determines whether or not the vehicle **23** can pass the marked object **59** with substantially keeping its present steering angle (position). More specifically, the passage-possibility determining portion **1b** determines whether or not the vehicle **23** can pass the marked object **59** without contacting it by checking the object **59** positioned at or near the roadside, not at the central portion of the road. This determination of passing possibility substantially is executed at the time of the above-described analysis by the obstacle detecting portion **1a,** and the passage-possibility determining portion **1b** determines whether the vehicle **23** can pass the marked object **59** based on the position and/or size of the marked object **59** and the information from the steering angle sensor **31,** vehicle speed sensor **35,** yaw rate sensor **33** and/or other detector(s) so on.

When the passage-possibility determining portion **1b** determines that the vehicle **23** can pass the marked object **59,** the obstacle detecting portion **1a** detects the marked object 59 as the obstacle positioned at or near the roadside (including the sidewalk). The one or more obstacle detection results (the obstacle's size, shape, position on the road, etc.) are inputted to the obstacle determining portion **1c** of the control unit **1.**

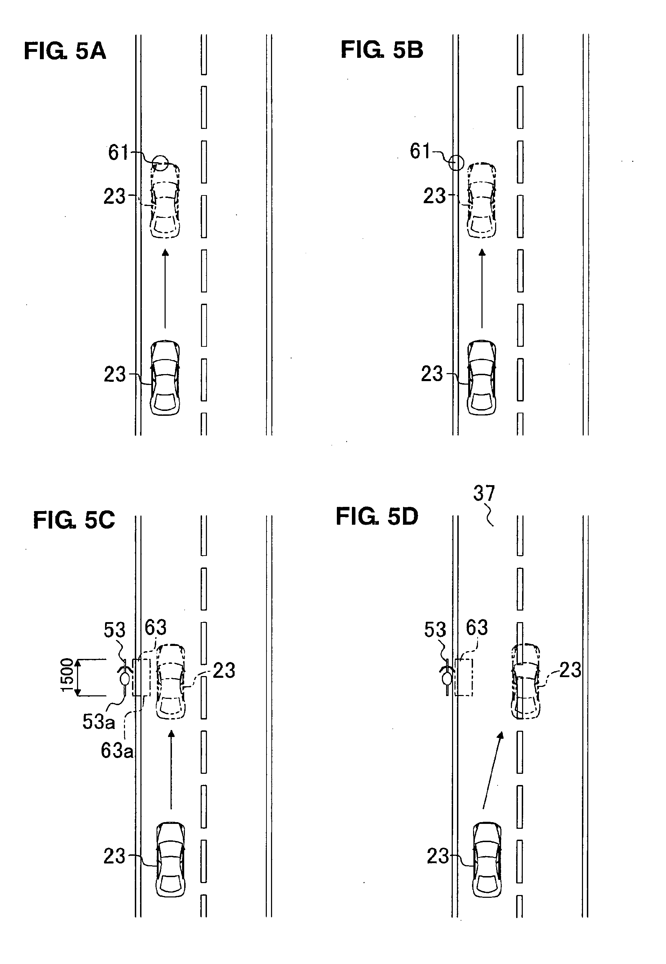

Meanwhile, when the passage-possibility determining portion **1b** determines that the vehicle **23** cannot pass (or is likely not to pass) the marked object **59,** the obstacle detecting portion **1a** detects the marked object **59** as the obstacle positioned at or near the central portion on the road. For example, as shown in FIG. **5A****,** in a case in which a drum can **61** is left at or near the central portion on the road (or a portion of the road where the vehicle is likely to pass), when the passage-possibility determining portion **1b** determines that the vehicle **23** cannot pass the marked object **59,** the warning control portion **1h** operates the warning device(s) **21** to warn the passenger of this impossible-passing situation particularly with a sound (first warning sound or signal) and/or conducts a pre-crash braking with the braking control portion **1g** which will be described later. Herein, the obstacle detecting means of the present embodiment corresponds to the millimeter-wave radar device **3,** CCD camera **5** and the obstacle detecting portion **1a** (including the passage-possibility determining portion **1b**).

The obstacle determining portion (obstacle determining means) **1c** is configured to determine whether or not the obstacle at or near the roadside detected by the obstacle detecting portion **1a** is the at least two-wheeled vehicle (automotive vehicle, motor cycle, bicycle, etc.). When the obstacle determining portion **1c** determines that the detected obstacle is not the two-wheeled vehicle, the vehicle **23** may travel passing the obstacle because the possibility of the too-close approach or improper contact of the vehicle **23** for the obstacle is properly low. In an example shown in FIG. **5B****,** the obstacle is the drum can **61** positioned at the roadside, so the vehicle **23** may pass the drum can **61** with substantially keeping the present steering angle of the vehicle **23.** Meanwhile, when the obstacle determining portion **1c** determines that the detected obstacle is the at least two-wheeled vehicle, this determination result is inputted to the dangerous-area setting portion **1d** of the control unit **1.**

The dangerous-area setting portion (dangerous-area setting means) **1d** sets the contact-dangerous area (where the vehicle **23** may possibly contact the obstacle) with the specified (predetermined or predeterminable) width (e.g. about 1m in the present embodiment) which is located by the detected obstacle on the side of the traveling vehicle **23** only when the obstacle determining portion **1c** determines that the detected obstacle is the at least two-wheeled vehicle. In other words, the dangerous-area setting portion **1d** is, as shown in FIG. **4B****,** configured to set the specified (predetermined or predeterminable) margin (e.g. of about 1 m) from the side end of the marked obstacle **59** (obstacle detected by the obstacle detecting portion **1a)** on the side of the vehicle **23** (on the right side in FIGS. **4A, 4B**) and/or (then) set an imaginary area (space) **63** which has the substantially same width as the margin and moves in accordance with the move of the obstacle. Herein, the dangerous-area setting portion **1d** particularly sets the contact-dangerous area **63** regardless of whether the at least two-wheeled vehicle stops or travels.

It is preferable that the contact-dangerous area **63** be configured such that the position of the rear end of this area **63** substantially corresponds to the position of the rear end of the obstacle or extends toward the side of the vehicle **23** (rearward) beyond the rear-end position of the obstacle because the contact-dangerous area **63** means the area where the vehicle **23** may possibly approach the obstacle too close or contact the obstacle. In the example shown in FIGS. **4B** and **5C****,** the contact-dangerous area **63** having the specified (predetermined or predeterminable) configuration or shape such as the width of about 1 m, the length of about 1.5m (the length of the bicycle) and/or the height of about 1.7m (the height of the bicycle including the passenger) is set for the bicycle **53** with the width of about 0.5m in such a manner that it is positioned on the right of the bicycle **53** and the position of its rear end **63a** substantially corresponds to the position of a rear end **53a** of the bicycle **53.** Thereby, the distance of about 1 m is generated between the right-side (the vehicle-road side) end of the bicycle (or the passenger) **53** and the left-side (the sidewalk side) end of the vehicle body of the vehicle **23** when the vehicle **23** passes the bicycle **53.** The information related to the contact-dangerous area **63** is inputted to the passing-possibility determining portion **1e** from the dangerous-area setting portion **1d.**

The passing-possibility determining portion **1e** determines whether the vehicle **23** can pass the bicycle **53** detected by the obstacle detecting portion **1a** without changing the steering angle by the passenger (with substantially keeping the present traveling direction) and at least partly entering into the contact-dangerous area **63** particularly based on one or more of the position and/or size of the contact-dangerous area **63** and the information from the steering angle sensor **31,** vehicle speed sensor **35,** yaw rate sensor **33** and so on. When the passing-possibility determining portion **1e** determines that the passing may be impossible, the warning control portion **1h** operates the warning device **21** to warn the passenger of this impossible-passing situation particularly with another waning sound (second warning sound or signal) which is different from the above-described first warning sound or signal, and/or the braking control portion **1g** operates a brake operator (braking means) **47** to conduct the braking to the vehicle **23.** The braking control portion (braking control means) **1g** is configured to conduct the braking to the vehicle **23** by operating the brake operator **47** to apply brake controls to the front wheels **15, 15** and/or the rear wheels **25, 25.** Meanwhile, when the passing-possibility determining portion **1 e** determines that the passing may be possible, this determination result is inputted to the entry detecting portion **1f** of the control unit **1.**

As described above, when the passing-possibility determining portion **1e** determines the impossible passing, the traveling control device of the vehicle **23** according to the present embodiment warns the passenger of this situation with the second warning sound or signal and/or makes the braking control portion **1g** conduct the braking, so that it can be prevented properly that the vehicle **23** enters into the contact-dangerous area **63.** Herein, there is a concern that the vehicle **23** would enter into the contact-dangerous area **63** because, for example, the vehicle may be enforced to approach the sidewalk in order to avoid the contact with another vehicle traveling in the opposite lane which comes closer abruptly or on the contrary the bicycle **53** may approach toward the vehicle road abruptly. For this reason, the entry detecting portion (entry detecting means) **1f** is configured to detect that the vehicle **23** at least partly enters into the contact-dangerous area **63.** And, when the entry of the vehicle **23** into the contact-dangerous area **63** is detected by the entry detecting portion **1f,** the warning control portion **1h** operates the warning device **21** to warn the passenger of this entry particularly with a different sound or signal (third warning sound or signal) from the above-described first and second warning sounds or signal, and/or the braking control portion **1g** operates the brake operator **47** to conduct the braking to the vehicle **23.**

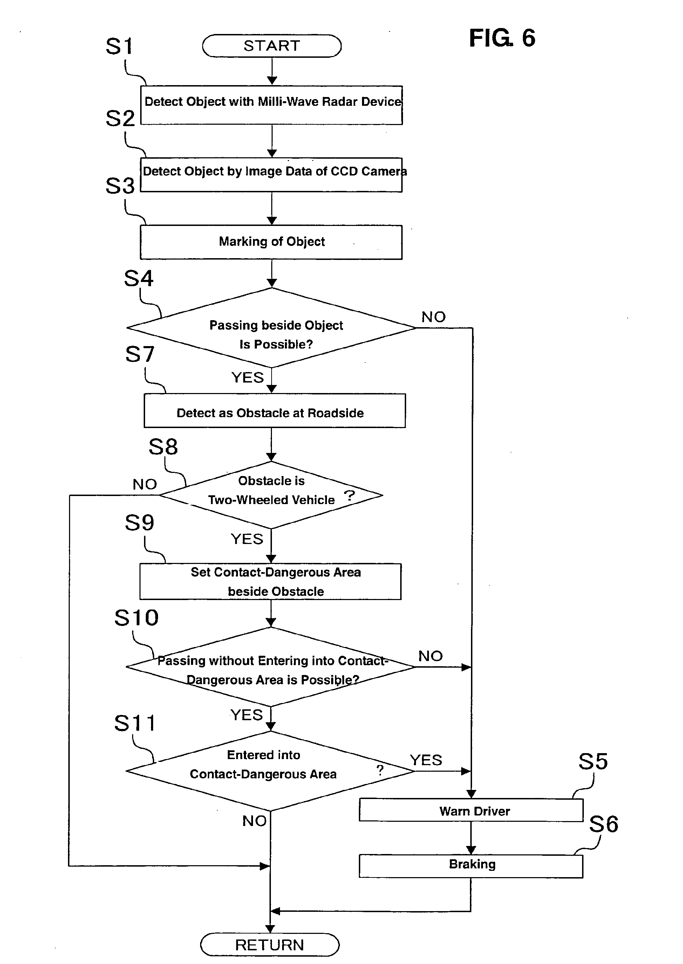

Hereinafter, the processing operations of the control unit **1,** the millimeter-wave device **3** and the CCD camera **5** will be described referring to the flowchart of FIG. **6****.**

In step **S1**, as described above, the millimeter-wave device **3** transmits the millimeter waves (or any other electromagnetic wave or the like) toward the object substantially in front of the vehicle **23,** at least partly receives and processes the reflection waves from the object, and thereby obtains the information of the distance **D** between the object and the vehicle **23** and/or the direction angle **A** of the object relative to the traveling direction of the vehicle **23.**

In the next step S**2**, the information on the size and/or shape of the object in front of the vehicle **23** is obtained based on the data of image picked up by the CCD camera **5.**

Then, in step **S3,** the obstacle detecting portion **1a** sets, for the object existing in front, the first-area frame **55** which encloses the specified (predetermined or predeterminable) area which is located with its distance **D** from the vehicle **23** and its location angle **A** relative to the traveling direction of the vehicle **23** based on the input information from the millimeter-wave radar device **3** which is obtained in the step **S1.** Further, the obstacle detecting portion **1a** sets the second-area frame **57** which at least partly encloses the object existing in front of the vehicle **23** based on the input information from the CCD camera **5** which is obtained in the step **S2.** And, the first-area frame and the second-area frame are at least partly overlapped and the marking of object is executed.

In the next step **S4,** the passage-possibility determining portion **1b** determines whether or not the vehicle **23** can pass (or is likely to pass) the marked object **59** with substantially keeping its present steering angle. When the determination in the step **S4** is NO, that is, when the impossible passing is determined by the passage-possibility determining portion **1b,** the processing sequence proceeds to step **S5,** where the warning control portion **1h** operates the warning device **21,** thereby warns the passenger of this situation of impossible passing of the vehicle 23 beside the marked object with the first warning sound or signal. Then, the processing sequence proceeds to step **S6.**

In the step **S6,** the braking control portion **1g** operates the brake operator **47** to conduct the braking to the vehicle, and then the processing sequence returns. Then, if the passenger changes the steering angle based on or as a consequence of the warning with the first warning sound or signal, the processing operations of the control unit **1** are repeated.

Meanwhile, when the determination is YES in the step **S4,** the processing sequence proceeds to step **S7,** where the obstacle detecting portion **1a** detects the marked object as the obstacle at or near the roadside.

In the next step **S8,** the obstacle determining portion **1c** determines whether the obstacle detected by the obstacle detecting portion **1a** is the at least two-wheeled vehicle or not. When the determination in the step **S8** is NO, that is, the obstacle determining portion **1c** determines that the detected obstacle is not the at least two-wheeled vehicle, the processing sequence returns simply because the vehicle **23** may travel passing the obstacle with keeping the present steering angle without changing. When the determination in the step **S8** is YES, that is, when the obstacle determining portion **1c** determines that the obstacle is the at least two-wheeled vehicle, such as the bicycle or the motor bicycle, the processing sequence proceeds to step **S9.**

In the step **S9,** the dangerous-area setting portion **1d** sets or defines the contact-dangerous area **63** with the specified (predetermined or predeterminable) configuration (e.g. with the width of between about 0.8 to about 1.2 m such as about 1m), where the traveling vehicle **23** may possibly contact the bicycle **53.** This contact-dangerous area **63** is the imaginary area which is moved in accordance with the move of the bicycle **53,** and the position of the rear end **63a** of this area **63** substantially corresponds to the position of the rear end **53a** of the bicycle **53.**

In the next step **S10,** the passing-possibility determining portion **1e** determines whether the vehicle **23** can pass the bicycle **53** without changing the steering angle by the passenger and at least partly entering into the contact-dangerous area **63.** When the determination in the step **S1** is NO, that is, when the passing-possibility determining portion **1e** determines that the vehicle **23** cannot pass (or likely not to pass) the bicycle **53,** the processing sequence proceeds to step **S5,** where the warning control portion **1h** operates the warning device **21,** thereby warns the passenger of this impossible-passing situation with the second warning sound or signal. Then, the processing sequence proceeds to the step **S6.**

In the step **S6,** the braking control portion **1g** operates the brake operator **47** to conduct the braking to the vehicle **23,** and then the processing sequence returns. Then, if the passenger changes the steering angle e.g. based on or as a consequence of the warning with the second warning sound or signal, the processing operations of the control unit **1** are repeated.

Meanwhile, when the determination in the step **S10** is YES, the processing sequence proceeds to step **S11,** where the entry detecting portion **1f** detects whether the vehicle **23** at least partly enters into the contact-dangerous area **63** or not. The possible passing has been determined in the step **S10**, so the vehicle **23** may travel with keeping the present steering angle to pass the bicycle **53.** In this case, when the determination in the step **S11** is NO, that is, when the vehicle **23** has passed the bicycle **53** substantially without entering into the contact-dangerous area **63,** the processing sequence returns.

Meanwhile, when the determination in the step **S11** is YES, that is, when the vehicle **23** has substantially entered into the contact-dangerous area **63** by approaching the sidewalk abruptly, the processing sequence proceeds to the step **S5**, where the warning control portion **1h** operates the warning device **21,** thereby warns the passenger of this situation of entry into the contact-dangerous area **63** with the third warning sound or signal. Then, the processing sequence proceeds to step **S6.**

In the step **S6,** the braking control portion **1g** operates the brake operator **47** to conduct the braking to the vehicle, and then the processing sequence returns.

According to the present embodiment, since the contact-dangerous area with the specified (predetermined or predeterminable) configuration (such as with the width of about 1 m) which is located beside the obstacle detected by the obstacle detecting portion **1a** is set and the warning device **21** is operated when the entry of the vehicle **23** into the contact-dangerous area **63** is detected, the vehicle **23** can be surely prevented from approaching the obstacle too close or contacting the obstacle, thereby improving the safety of the vehicle traveling.

Also, since the dangerous-area setting portion **1d** is configured to set the contact-dangerous area **63** only when it is detected by the obstacle determining portion **1c** that the obstacle is the at least two-wheeled vehicle (or an object which is likely to move on its own), particularly the safety of the bicycle **53** as the two-wheeled vehicle which may be unstable in traveling particularly compared with the four-wheeled vehicle can be improved. Further, since the contact-dangerous area **63** is set only when the at least two-wheeled vehicle is detected, the safe and smooth traveling of the vehicle **23** can be provided with a reduction of the chance of setting the contact-dangerous area **63** properly.

Further, there is provided the passing-possibility determining portion **1e** which determines whether or not the vehicle **23** can pass the bicycle **53** without entering into the contact-dangerous area **63** and the warning control portion **1h** is configured to further operate the warning device **21** when it is determined by the passing-possibility determining portion **1e** that the vehicle **23** cannot pass the bicycle **53,** the passenger of the vehicle **23** can be warned of the situation in which the vehicle **23** may not pass the bicycle **53** before approaching the bicycle **53,** thereby improving the safety of the vehicle traveling, assisting the passenger.

Also, since the braking control portion **1g** operates the brake operator **47** when it is determined by the passing-possibility determining portion **1e** that the vehicle **23** cannot pass (or is likely not to pass) the obstacle, the brake operator **47** operates before the vehicle **23** approaches the bicycle **53.** Accordingly, the safety of the vehicle traveling can be improved further by surely preventing the vehicle **23** from approaching the bicycle **53** too close or improperly contacting the bicycle **53.**

Further, since the braking control portion **1g** particularly operates the brake operator **47** even in a case in which it is detected by the entry detecting portion **1f** that the vehicle **23** has at least partly entered into the contact-dangerous area **63,** the brake operator **47** operates when the vehicle **23** passes the bicycle **53** even if the vehicle **23** has entered into the contact-dangerous area **63.** Accordingly, it can be prevented that the vehicle **23** travels along with the bicycle **53** side by side or passes the bicycle **53** in the state in which the vehicle **23** becomes so close to the bicycle **53.**

### EMBODIMENT 2

The present embodiment is different from the above-described first embodiment in providing an assist means operative to assist the vehicle **23** so that the vehicle **23** travels inside a specified (predetermined or predeterminable) traveling lane and a passing determining portion **1i** operative to determine whether the vehicle **23** has passed the obstacle or not. Hereinafter, the different feature(s) from the first embodiment will be described.

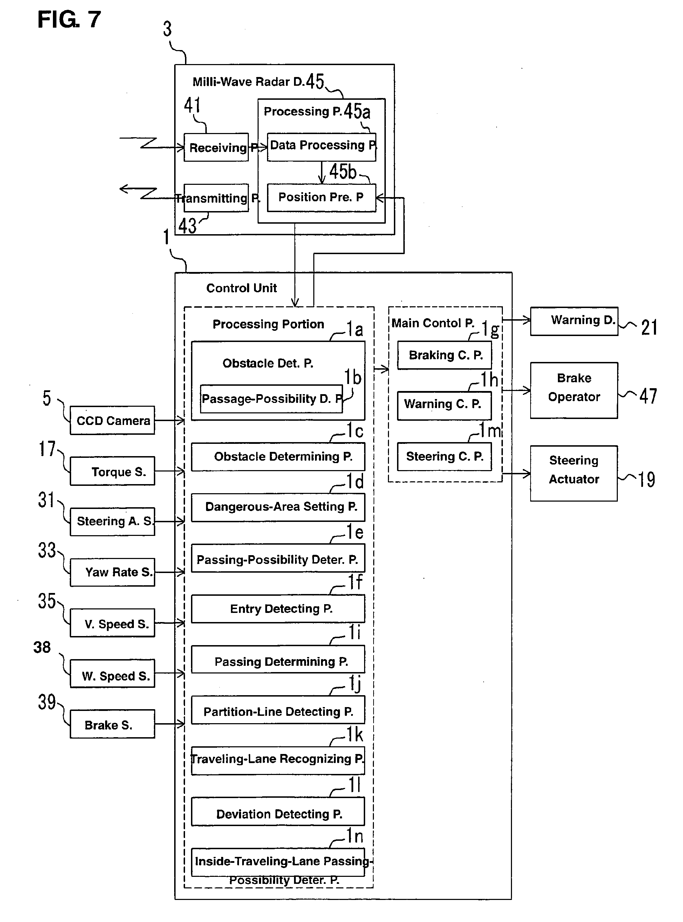

The processing portion of the control unit **1** further comprises, as shown in FIG. **7****,** a passing determining portion **1i**, a partition-line detecting portion **1j**, a traveling-lane recognizing portion **1k,** a deviation detecting portion **1l** and/or an inside-traveling-lane passing-possibility determining portion **1n**, in addition to the above-described obstacle detecting portion **1a,** obstacle determining portion **1c,** dangerous-area setting portion **1d,** passing-possibility determining portion **1e** and/or entry detecting portion **1f**. Further, the main control portion of the control unit **1** comprises a steering control portion **1m** in addition to the braking control portion **1g** and/or the warning control portion **1h.**

The CCD camera **5** picks up images of not only the obstacle in front of the vehicle **23,** but various traveling partition lines such as the line for partitioning the traveling lanes, the center line and/or the border line for separating the vehicle road from the sidewalk. The data of images picked up by the CCD camera **5** is inputted to the partition-line detecting portion **1j** of the control unit **1** as shown in FIG. **7****.** The partition-line detecting portion **1j** detects the traveling partition lines such as white lines on the road in front of the vehicle **23** based on the image data. White lines **27, 27** at both sides are recognized in an example of FIG. **1****.** Detection results of the partition-line detecting portion **1j** are inputted to the traveling-lane recognizing portion **1k** of the control unit **1,** and the traveling-lane recognizing portion **1k** recognizes the traveling lanes based on the traveling partition lines detected by the partition-line detecting portion **1j**.

In a case in which there exist two traveling partition lines in front of the vehicle **23,** the traveling-lane recognizing portion **1k** recognizes the inside area between the detected two traveling partition lines as a specified traveling lane. In the example of FIG. **1****,** when the both-side white lines **27, 27** in front of the vehicle **23** are detected by the partition-line detecting portion **1j**, the traveling-lane recognizing portion **1k** recognizes the inside area between these white lines **27, 27** as a specified traveling lane **37.**

Meanwhile, in a case in which at least one of the traveling partition lines at the both sides is not detected, that is, in a case in which there exists one traveling partition line or no traveling partition line in front of the vehicle **23,** the road on which the vehicle **23** is traveling at present is recognized as the specified traveling lane based on the vehicle traveling location (traveling locus) which corresponds to this present road, which is memorized in a memory, not illustrated.

The information on the traveling lane **37** which has been recognized by the traveling-lane recognizing portion **1k** is supplied to the deviation detecting portion **1l** of the control unit **1,** which is configured to detect that the vehicle **23** has deviated from the specified traveling lane recognized or predict this deviation. To the deviation detecting portion **1l** particularly are, in addition to one or more of the traveling-lane information, inputted the respective information from the torque sensor **17,** steering angle sensor **31,** yaw rate sensor **33,** vehicle speed sensor **35,** wheel speed sensor **38** to detect the rotational speeds of the front wheels **15, 15** and/or the rear wheels **25, 25,** brake sensor **39** to detect the brake-pedal operation by the passenger or driver of the vehicle **23,** and so on. The deviation detecting portion **1l** predicts the lateral position of the vehicle **23** relative to the traveling lane **37** based on the inputted information, thereby detecting that the vehicle **23** has deviated from the traveling lane **37** or predicting this deviation.

When the deviation of the vehicle **23** has been detected or predicted by the deviation detecting portion **1l,** this deviation related information of the vehicle **23** is transmitted to the steering control portion **1m** of the control unit **1.** The steering control portion **1m** conducts the traveling control (steering control in the present embodiment) in response to the input of the deviation related information so that the vehicle **23** can travel in the traveling lane **37** which is recognized by the traveling-lane recognizing portion **1k.** Specifically, it controls drive of a steering actuator **19** so that the vehicle **23** does not deviate from the specified traveling lane **37** recognized. The steering actuator **19** is provided at the above-described rack shafts **13** so as to make the rack shaft **13** reciprocate. Herein, the brake control by the above-described braking control portion **1g** may be applied in place of this steering control, or the both controls may be applied.

Further, when the deviation of the vehicle **23** has been detected or predicted by the deviation detecting portion **1l,** this deviation related information is transmitted to the warning control portion **1h** as well. The warning control portion **1h** operates the warning device **21** in response to the input of the deviation related information so as to warn the passenger of the above-described deviation or its possibility (deviation prediction situation) with another sound (fourth warning sound) which is different from the above-described first, second and third warning sounds. Herein, the assist means operative to assist the vehicle **23** so that the vehicle **23** travels inside the specified traveling lane **37** which is recognized by the traveling-lane recognizing portion **1k** of the present embodiment corresponds to the partition-line detecting portion **1j**, traveling-lane recognizing portion **1k,** deviation detecting portion **1l**, steering control portion **1m,** warning control portion **1h,** steering actuator **19** and/or warning device **21.**

Herein, there may be a case in which the vehicle could pass the bicycle **53** substantially without entering into the contact-dangerous area **63** by deviating from the traveling lane **37** when the present traveling road has no passing-prohibition section and there is no vehicle on the opposite traveling lanes as shown in FIG. **5D****.** In this case, it may be preferable that the steering control be cancelled temporarily for allowing a smooth and proper change of the traveling lane of the vehicle **23.** Accordingly, the control unit **1** comprises an inside-traveling-lane passing-possibility determining portion (corresponding to an inside-traveling-lane passing-possibility determining means) **1n** which determines whether or not the vehicle **23** can pass the obstacle inside the specified traveling lane **37** substantially without entering into the contact-dangerous area **63.** The assist means is configured not to operate when it is determined by the inside-traveling-lane passing-possibility determining portion **1n** that the vehicle **23** cannot pass the obstacle without entering into the contact-dangerous area **63.** Specifically, when it is determined by the inside-traveling-lane passing-possibility determining portion **1n** that the vehicle **23** cannot pass the obstacle inside the specified traveling lane **37,** the deviation detecting portion **1l** does not operate.

The inside-traveling-lane passing-possibility determining portion **1n** is configured to determine whether or not the vehicle **23** can pass the bicycle **53** without entering into the contact-dangerous area **63** in a case in which the vehicle **23** changes the steering angle keeping its traveling inside the specified traveling lane **37.** When the impossible passing is detected by the above-described passing-possibility determining portion **1e** and the impossible passing inside the specified traveling lane **37** is detected by the inside-traveling-lane passing-possibility determining portion **1n,** the passenger can be warned of this impossible passing situation in which the vehicle **23** may not pass the bicycle **53** even by changing the steering angle as long as it keeps its traveling inside the specified traveling lane **37** with another sound or signal (fifth warning sound or signal) which is different from the first, second, third and fourth warning sounds or signals. Herein, since the assist means does not operate (the braking is cancelled temporarily) when the passenger tries to change the traveling lane **37** for passing the bicycle **53,** this lane change can be conducted smoothly. Further, since the assist means does not operate when the passenger tries to operate the steering for returning to the previous traveling lane **37** after passing the bicycle **53,** this lane return can be conducted smoothly.

The determination result of the inside-traveling-lane passing-possibility determining portion **1n** and the information on the steering angle of the steering wheel **7** by the steering angle sensor **31** and the like are inputted to the passing determining portion **1i** of the control unit **1.** The passing determining portion (corresponding to the passing determining means) **1i** is configured to determine whether the vehicle **23** has passed the obstacle detected by the obstacle detecting portion **1a** or not. Specifically, it is determined whether the vehicle **23** has passed the bicycle **53** by checking whether the bicycle **53** exists in front of the vehicle **23** (or has left the respective determination area) or not based on the predicted position of the vehicle **23** relative to the bicycle **53,** which is calculated or determined particularly based on the traveling speed of the bicycle **53,** the traveling speed of the vehicle **23** and the lapse time from the lane changing to the lane return, and the image data of the CCD camera **5.** Further, the assist means is configured to restart one or more of the steering-angle control, warning control and the like without any switch operation by the passenger when it is determined by the passing determining portion **1i** that the vehicle **23** has passed the bicycle **53.**

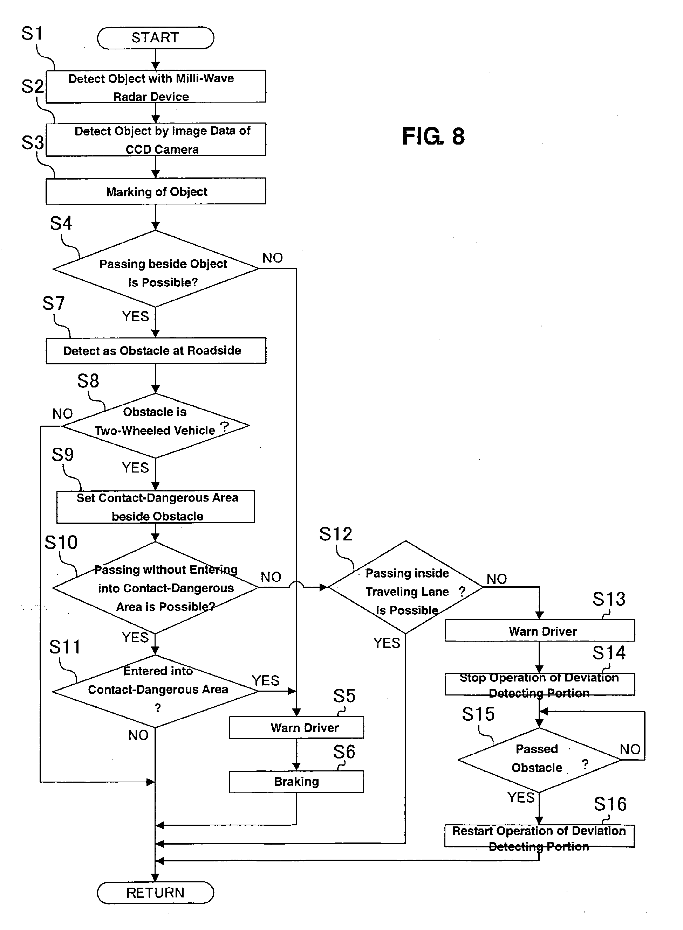

Hereinafter, the processing operation of the control unit **1** will be described referring to the flowchart of FIG. **8****.** Herein, other steps than the steps **S10, S12-S16** in FIG. **8** substantially are the same as those of the flowchart shown in FIG. **6****.**

When the determination in the step **S10** is NO, that is, when it is determined by the passing-possibility determining portion **1e** that the vehicle **23** may not pass the bicycle **53** without at least partly entering into the contact-dangerous area **63** unless the passenger changes the steering angle, the processing sequence proceeds to the step **S12.** In the step **S12,** the inside-traveling-lane passing-possibility determining portion **1n** determines whether or not the vehicle **23** can pass the bicycle **53** inside the specified traveling lane **37** without entering into the contact-dangerous area **63.** When the determination in the step **S12** is YES, that is, when it is determined that the vehicle **23** can pass the bicycle 53 inside the specified traveling lane **37** by changing the steering angle by the passenger, the processing sequence returns. If the passenger changes the steering angle so that the vehicle **23** does not deviate from the traveling lane **37,** the processing operation of the control unit **1** is restarted.

Meanwhile, when the determination in the step **S12** is NO, that is, when it is determined by the inside-traveling-lane passing-possibility determining portion **1n** that the vehicle **23** may not pass the bicycle **53** inside the specified traveling lane **37,** the processing sequence proceeds to the step **S13,** where the warning control portion **1h** operates the warning device **21** to warn the passenger of this impossible passing situation with the fifth warning sound or signal. Then, the processing sequence proceeds to the step **S14.**

In the next step **S14,** the operation of the deviation detecting portion **1l** stops, so that the steering control of the steering control portion **1m** stops and the warning device **21** stops. Then, the processing sequence proceeds to the step **S15.**

In the step **S15,** the passing determining portion **1i** determines whether the vehicle **23** has passed the bicycle **53** or not. When the determination in the step **S15** is NO, that is, when it is determined by the passing determining portion **1i** that the vehicle **23** has not passed the bicycle **53,** the determination of passing by the passing determining portion **1i** continues.

Meanwhile, when the determination in the step **S15** is YES, that is, when it is determined by the passing determining portion **1i** that the vehicle **23** has passed the bicycle **53,** the processing sequence proceeds to the step **S16,** where the operation of the deviation detecting portion **1l** is restarted and the steering control is restarted. Then, the processing sequence returns

According to the present embodiment, since there is provided the assist means which assists the vehicle **23** so that the vehicle **23** travels inside the specified traveling lane **37,** the smooth and safe traveling of the vehicle **23** inside the specified traveling lane **37** can be provided. Herein, the assist means is configured not to operate when it is determined by the inside-traveling-lane passing-possibility determining portion **1n** that the vehicle **23** cannot pass the bicycle **53** inside the specified traveling lane **37** so that in a case in which the vehicle **23** cannot pass the bicycle **53** inside the specified traveling lane **37** without entering into the contact-dangerous area **63,** the vehicle **23** can travel passing the bicycle **53** by changing the traveling lane properly.

Also, there is particularly provided the passing determining portion **1i** which determines whether or not the vehicle **23** has passed the bicycle 53 which is detected by the obstacle detecting portion **1a,** and the assist means is configured to automatically restart its operation when it is determined by the passing determining portion **1i** that the vehicle **23** has passed the bicycle **53.** Thereby, the smooth and safe traveling of the vehicle **23** inside the specified lane can be provided without making the passenger have any troublesome feeling.

Herein, while the assist means particularly is configured not to operate when it is determined by the inside-traveling-lane passing-possibility determining portion **1n** that the vehicle **23** cannot pass the bicycle **53** inside the specified traveling lane **37,** it may be configured not to operate when the impossible passing inside the specified traveling lane **37** is determined and the passenger operates the turn signal of the vehicle, for example. In this case, the vehicle **23** can be assisted so as to continue to travel inside the traveling lane **37** when the passenger has no intention to pass the motor cycle and the like.

Further, while the passing determining portion **1i** is configured to determine whether or not the vehicle **23** has passed the obstacle detected by the obstacle detecting portion **1a** based on the image data of the front camera (CCD camera) **5,** it may be configured to make the determination based on data of image of a rear camera which picks up the rear image of the vehicle **23,** for example.

Herein, while the dangerous-area setting portion **1d** sets the contact-dangerous area **63** when it is determined by the obstacle determining portion **1c** that the obstacle detected by the obstacle detecting portion **1a** is the (at least) two-wheeled vehicle according to the above-described embodiments, setting of the contact-dangerous area **63** may be conducted for the four-wheeled vehicle, not limited to the two-wheeled vehicle. In this case, even in a situation in which a door of another vehicle which stops in front of the vehicle **23** is opened abruptly or a pedestrian rushes out from behind this front vehicle, it can be surely prevented that the vehicle **23** approaches the door or the pedestrian too close or contacts them, thereby improving the safety of the vehicle traveling.

Further, while the millimeter-wave device **3** is applied according to the above-described embodiments, a supersonic-wave sensor may be used, for example. In this case with the sensor operative to detect a non-metal object, the contact-dangerous area **63** may be also set for any human or animal that is positioned at the roadside in front of the vehicle **23,** thereby further improving the safety of the vehicle traveling.

The present invention should not be limited to the above-described embodiments, and any other modifications and improvements may be applied in the scope of a sprit of the present invention.

## Claims

1. A traveling control device for a vehicle **(23),** comprising:
an obstacle detecting means (**1a, 1b, 3, 5)** operative to detect an obstacle substantially in front of the vehicle **(23);**
a dangerous-area setting means **(1d)** operative to set a contact-dangerous area with a specified width which is located beside the obstacle which is detected by said obstacle detecting means **(1a, 1b, 3, 5);**
an entry detecting means **(1f)** operative to detect an at least partly entry of the vehicle **(23)** into the contact-dangerous area set by said dangerous-area setting means **(1d);** and
a warning control means **(1h)** operative to operate a warning means **(21)** when the at least partial entry of the vehicle **(23)** into the contact-dangerous area is detected by said entry detecting means **(1f).**

2. The traveling control device for a vehicle **(23)** of claim 1, further comprising an obstacle determining means **(1c)** operative to determine whether the obstacle detected by said obstacle detecting means (**1a, 1b, 3, 5**) is a two-wheeled vehicle or not, wherein said dangerous-area setting means **(1d)** is configured to set the contact-dangerous area only when it is detected by the obstacle determining means **(1a, 1b, 3, 5)** that the obstacle is the two-wheeled vehicle.

3. The traveling control device for a vehicle **(23)** of claim 1 or 2, further comprising a passing-possibility determining means **(1e)** operative to determine whether the vehicle **(23)** can pass the obstacle without at least partly entering into the contact-dangerous area set by said dangerous-area setting means **(1d),** wherein said warning control means **(1h)** is configured to further operate the warning means **(21)** when it is determined by the passing-possibility determining means (**1e**) that the vehicle **(23)** cannot pass the obstacle without entering into the contact-dangerous area.

4. The traveling control device for a vehicle **(23)** of claim 3, further comprising a braking control means **(1g)** operative to operate a braking means **(47)** of the vehicle **(23)** when it is determined by the passing-possibility determining means (**1e**) that the vehicle **(23)** cannot pass the obstacle without at least partly entering into the contact-dangerous area.

5. The traveling control device for a vehicle **(23)** of any one of the preceding claims, further comprising a braking control means **(1g)** operative to operate a braking means **(47)** of the vehicle **(23)** when it is determined by said entry detecting means **(1f)** that the entry of the vehicle **(23)** into the contact-dangerous area is detected.

6. The traveling control device for a vehicle **(23)** of any one of the preceding claims, further comprising an assist means (**1j, 1k, 1l, 1m, 1h, 19, 21**) operative to assist the vehicle **(23)** so that the vehicle **(23)** travels inside a specified traveling lane and an inside-traveling-lane passing-possibility determining means **(1n)** operative to determine whether the vehicle **(23)** can pass the obstacle inside the specified traveling lane without entering into the contact-dangerous area set by said dangerous-area setting means **(1d),** wherein said assist means **(1j, 1k, 1l, 1m, 1h, 19, 21**) is configured not to operate when it is determined by the inside-traveling-lane passing-possibility determining means **(1n)** that the vehicle **(23)** cannot pass the obstacle without entering into the contact-dangerous area.

7. The traveling control device for a vehicle **(23)** of claim 6, further comprising a passing determining means **(1i)** operative to determine whether the vehicle **(23)** has passed the obstacle or not, wherein said assist means **(1j, 1k, 1l, 1m, 1h, 19, 21**) is configured to restart an operation thereof when it is determined by said passing determining means (**1i**) that the vehicle **(23)** has passed the obstacle.

8. A traveling control method for a vehicle **(23),** comprising the following steps:
detecting (**S2; S3**) an obstacle substantially in front of the vehicle **(23);**
setting **(S9)** a contact-dangerous area with a specified width which is located beside the obstacle which is detected in said detecting step **(S2; S3**);
detecting (**S11**) an at least partly entry of the vehicle **(23)** into the contact-dangerous area set in said setting step **(S9);** and
operating (S5; **S13**) a warning means (**21**) when the at least partial entry of the vehicle **(23)** into the contact-dangerous area is detected in said detecting step (**S11**).

9. The traveling control method of claim 8, further comprising a step of determining whether the obstacle detected in said detecting step **(S2; S3)** is a two-wheeled vehicle or not, wherein in said setting step **(S9)** the contact-dangerous area is set only when it is detected that the obstacle is the two-wheeled vehicle.

10. The traveling control method of claim 8 or 9, further comprising a passing-possibility determining step determining whether the vehicle **(23)** can pass the obstacle without at least partly entering into the contact-dangerous area set in said setting step **(S9),** wherein in said warning step **(S5; S13)** the warning means **(21)** is further operated when it is determined in the passing-possibility determining step that the vehicle **(23)** cannot pass the obstacle without at least partly entering into the contact-dangerous area.

11. The traveling control method of claim 10, further comprising a braking control step **(S6)** in which a braking means **(47)** of the vehicle **(23)** is operated when it is determined in the passing-possibility determining step that the vehicle **(23)** cannot pass the obstacle without at least partly entering into the contact-dangerous area.

12. The traveling control method of any one of the preceding claims 8 to 11, further comprising a braking control step in which a braking means **(47)** of the vehicle **(23)** is operated when it is determined in said entry detecting step that the entry of the vehicle **(23)** into the contact-dangerous area is detected.

13. The traveling control method of any one of the preceding claims 8 to 12, further comprising assisting the vehicle **(23)** so that the vehicle **(23)** travels inside a specified traveling lane and an inside-traveling-lane passing-possibility determining step **(S12)** determining whether the vehicle **(23)** can pass the obstacle inside the specified traveling lane without entering into the contact-dangerous area set in said dangerous-area setting step **(S9),** wherein said assisting of the vehicle **(23)** is not operated when it is determined in the inside-traveling-lane passing-possibility determining step that the vehicle **(23)** cannot pass the obstacle without at least partly entering into the contact-dangerous area.

14. The traveling control method of claim 13, further comprising a passing determining step determining whether the vehicle **(23)** has passed the obstacle or not, wherein said in said assisting an operation thereof is restarted when it is determined in said passing determining step that the vehicle **(23)** has passed the obstacle.

15. A computer program product comprising computer-readable instructions which, when loaded and executed on a suitable system, perform the steps of the traveling control method for a vehicle **(23)** according to any one of the preceding claims 8 to 14.
